# FASCICULE DE BREVET EUROPEEN

(11) **EP 1 831 118 B1**
(45) Date de publication et mention de la délivrance du brevet: **13.02.2013**
(21) Numéro de dépôt: 05825565.4
(22) Date de dépôt: 15.12.2005
(51) Int. Cl.: C03C 3/091

(54) **FILS DE VERRE APTES A RENFORCER DES MATIERES ORGANIQUES ET/OU INORGANIQUES.**
GLASGARNE ZUR VERSTÄRKUNG VON ORGANISCHEN ODER ANORGANISCHEN MATERIALIEN
GLASS YARNS FOR REINFORCING ORGANIC AND/OR INORGANIC MATERIALS

(30) Priorité: 16.12.2004 FR 0413443
(43) Date de publication de la demande: 12.09.2007
(73) Titulaire: OCV Intellectual Capital, LLC, Toledo, OH 43659 (US)
(72) Inventeur: LECOMTE, Emmanuel, 93600 Aulnay Sous Bois (FR); BERTHEREAU, Anne, F-73190 Challes Les Eaux (FR)
(74) Mandataire: Nevant, Marc
(86) Numéro de dépôt international: PCT/FR2005/051090
(87) Numéro de publication internationale: WO 2006/064164

(56) Documents cités:
- US-A- 3 892 581
- US-A- 4 199 364

## Description

La présente invention concerne des fils ("ou fibres") de verre "de renforcement", c'est-à-dire aptes à renforcer des matières organiques et/ou inorganiques et utilisables comme fils textiles, ces fils étant susceptibles d'être obtenus par le procédé qui consiste à étirer mécaniquement des filets de verre fondu s'écoulant d'orifices disposés à la base d'une filière généralement chauffée par effet Joule.

La présente invention vise plus précisément des fils de verre ayant un module d'Young spécifique élevé, et présentant une composition quaternaire du type SiO₂-Al₂O₃-CaO-MgO particulièrement avantageuse.

Le domaine des fils de verre de renforcement est un domaine très particulier de l'industrie du verre. Ces fils sont élaborés à partir de compositions de verre spécifiques, le verre utilisé devant pouvoir être étiré sous la forme de filaments de quelques micromètres de diamètre suivant le procédé indiqué précédemment et devant permettre la formation de fils continus aptes à remplir un rôle de renfort.

Dans certaines applications notamment aéronautiques, on cherche à obtenir des pièces de grande dimension aptes à fonctionner dans des conditions dynamiques et qui par conséquent sont aptes à résister à des contraintes mécaniques élevées. Ces pièces sont le plus souvent à base de matières organiques et/ou inorganiques et d'un renfort, par exemple sous forme de fils de verre, qui occupe en général plus de 50 % du volume.

L'amélioration des propriétés mécaniques et du rendement de telles pièces passe par une amélioration des performances mécaniques du renfort, notamment du module d'Young spécifique.

Les propriétés du renfort, dans le cas des fils de renforcement en verre, sont principalement régies par la composition du verre qui les constitue. Les fils de verre les plus connus pour renforcer des matières organiques et/ou inorganiques sont constitués de verre E ou R.

Les fils en verre E sont couramment employés pour former des renforts, soit tels quels soit sous forme d'assemblages organisés tels que des tissus. Les conditions dans lesquelles le verre E peut être fibré sont très avantageuses : la température de travail correspondant à la température à laquelle le verre a une viscosité proche de 1000 poises est relativement basse, de l'ordre de 1200°C, la température de liquidus est inférieure d'environ 120°C à la température de travail et sa vitesse de dévitrification est faible.

La composition du verre E définie dans la norme ASTM D 578-98 pour les applications dans les domaines de l'électronique et de l'aéronautique est la suivante (en pourcentage pondéral) : 52 à 56 % de SiO₂; 12 à 16 % d'Al₂O₃; 16 à 25 % de CaO; 5 à 10 % de B₂O₃; 0 à 5 % de MgO; 0 à 2 % de Na₂O + K₂O; 0 à 0,8 % de TiO₂; 0,05 à 0,4 % de Fe₂O₃; 0 à 1 % de F₂.

Néanmoins, le verre E en masse présente un module d'Young spécifique relativement faible, de l'ordre de 33 MPa/kg/m³.

Dans la norme ASTM D 578-98, il est décrit d'autres fils de renforcement de verre E, éventuellement sans bore. Ces fils ont la composition suivante (en pourcentage pondéral) : 52 à 62 % de SiO₂; 12 à 16 % d'Al₂O₃; 16 à 25 % de CaO; 0 à 10 % de B₂O₃; 0 à 5 % de MgO; 0 à 2 % de Na₂O + K₂O; 0 à 1,5 % de TiO₂; 0,05 à 0,8 % de Fe₂O₃; 0 à 1 % de F₂.

Les conditions de fibrage du verre E sans bore sont moins bonnes que celles du verre E avec bore mais elles restent cependant acceptables économiquement. Le module d'Young spécifique demeure à un niveau de performance équivalent à celui du verre E.

Il est encore connu de US 4 199 364 un verre économique, sans bore et sans fluor, qui présente des propriétés mécaniques, notamment en termes de résistance en traction, comparables à celles du verre E.

Le brevet US 3 892 581 décrit des fibres de verre présentant une résistance en traction améliorée par rapport aux fils de verre E.

Le verre R en masse est connu pour ses bonnes propriétés mécaniques notamment au regard du module d'Young spécifique qui est de l'ordre de 33,5 MPa/kg/m³. En revanche, les conditions de fusion et de fibrage sont plus contraignantes que pour les verres du type E susmentionnés, et donc son coût final est plus élevé.

La composition du verre R est donnée dans FR-A-1 435 073. Elle est la suivante (en pourcentage pondéral) : 50 à 65 % de SiO₂; 20 à 30 % d'Al₂O₃; 2 à 10 % de CaO; 5 à 20 % de MgO; 15 à 25 % de CaO + MgO; SiO₂/Al₂O₃ = 2 à 2,8; MgO/ SiO₂ < 0,3.

D'autres tentatives pour augmenter la résistance mécanique des fils de verre ont été faites mais généralement au détriment de leur aptitude au fibrage, la mise en oeuvre devenant alors plus difficile ou imposant d'avoir à modifier les installations de fibrage existantes.

Il existe donc un besoin de disposer de fils de verre de renforcement ayant un coût aussi proche que possible de celui du verre E et présentant des propriétés mécaniques à un niveau de performance comparable à celui du verre R.

La présente invention a pour but de fournir de tels fils de verre de renforcement qui allient les propriétés mécaniques du verre R, en particulier au niveau du module d'Young spécifique, et des propriétés de fusion et de fibrage améliorées se rapprochant de celles du verre E.

Ce but est atteint grâce aux fils de verre dont la composition comprend les constituants suivants dans les limites définies ci-après exprimées en pourcentages pondéraux :

| | |
|---|---|
| SiO₂ | 50 - 65 % |
| Al₂O₃ | 12 - 20% |
| CaO | 12 - 17 % |
| MgO | 6-12% |
| CaO/MgO | ≤ 2, de préférence ≥ 1,3 |
| Li₂O | 0,1 - 0,8 %, de préférence ≤ 0,6 % |
| BaO+SrO | 0 - 3 % |
| B₂O₃ | 0 - 3 % |
| TiO₂ | 0-3% |
| Na₂O + K₂O | < 2 % |
| F₂ | 0 - 1 % |
| Fe₂O₃ | < 1 % |

La silice SiO₂ est l'un des oxydes qui forme le réseau des verres selon l'invention et joue un rôle essentiel pour leur stabilité. Dans le cadre de l'invention, lorsque le taux de silice est inférieur à 50 %, la viscosité du verre devient trop faible et les risques de dévitrification lors du fibrage sont augmentés. Au-delà de 65 %, le verre devient très visqueux et difficile à fondre. De préférence, le taux de silice est compris entre 58 et 63 %.

L'alumine Al₂O₃ constitue également un formateur du réseau des verres selon l'invention et joue un rôle essentiel à l'égard du module, combiné avec la silice. Dans le cadre des limites définies selon l'invention, la diminution du pourcentage de cet oxyde au-dessous 12 % entraîne une diminution du module d'Young spécifique et contribue à une augmenter les vitesses maximales de dévitrification, alors qu'une trop forte augmentation du pourcentage de cet oxyde au-delà de 20 % entraîne des risques de dévitrification et une augmentation de la viscosité. De préférence, la teneur en alumine des compositions sélectionnées est compris entre 13 et 18 %. De manière avantageuse, la somme des teneurs en silice et en alumine est supérieure à 70 % et mieux encore supérieure à 75 %, ce qui permet d'obtenir des valeurs intéressantes du module d'Young spécifique.

La chaux CaO permet d'ajuster la viscosité et de contrôler la dévitrification des verres. La teneur en CaO est de préférence comprise entre 13 et 15 %.

La magnésie MgO, tout comme CaO, joue le rôle de fluidifiant et a aussi un effet bénéfique sur le module d'Young spécifique. La teneur en MgO est comprise entre 6 et 12 %, de préférence entre 7 et 9 %.

Le rapport pondéral CaO/MgO s'avère essentiel pour contrôler la dévitrification. Les inventeurs ont identifié qu'un rapport CaO/MgO inférieur ou égal à 2, de préférence supérieur à 1,3, permet de favoriser la cristallisation du verre en plusieurs phases (anorthite : CaO.Al₂O₃.2SiO₂ et diopside : CaO.MgO.2SiO₂, voire forstérite : 2MgO.SiO₂ ou enstatite : MgO.SiO₂) qui entrent en compétition pour croître au dépend de la phase liquide. Cette compétition a pour effet de limiter la vitesse maximale de croissance des phases cristallines, donc de diminuer le risque de dévitrification du verre, et de permettre le fibrage dans de bonnes conditions.

D'autres oxydes de métal alcalino-terreux, par exemple BaO et SrO, peuvent être présents dans la composition de verre. La teneur totale en ces oxydes est maintenue inférieure à 3 %, de préférence inférieure à 1 % afin de ne pas augmenter la densité du verre, ce qui a pour effet de d'abaisser le module d'Young spécifique. En règle générale, la composition est substantiellement exempte de BaO et de SrO.

L'oxyde de lithium Li₂O tout comme MgO joue le rôle de fluidifiant et permet aussi d'augmenter le module d'Young spécifique. Au-delà de 0,8 %, Li₂O entraîne une diminution importante de la température de travail, et donc de la plage de formage (écart entre la température de travail et la température de liquidus), qui ne permet plus de fibrer le verre dans des conditions satisfaisantes.

En outre, Li₂O est coûteux car il est essentiellement apporté par deux matières premières, l'une synthétique et chère, le carbonate de lithium, et l'autre naturelle, le spodumène qui contient seulement 7 à 8 % de Li₂O et doit donc être introduite en quantité importante dans le mélange vitrifiable. L'oxyde de lithium est par ailleurs très volatil conduisant à une perte d'environ 50 % lors de la fusion. Pour toutes ces raisons, la teneur en Li₂O dans la composition de verre selon l'invention varie de 0,1 à 0,8 % et de préférence est limitée à 0,6 % et mieux encore à 0,5 %.

De préférence, la somme des teneurs en Al₂O₃, en MgO et en Li₂O est supérieure ou égale à 23 %, ce qui permet d'obtenir des valeurs du module d'Young spécifique tout à fait satisfaisantes (supérieures à 36 MPa/kg/m³) tout en ayant de bonnes conditions de fibrage.

L'oxyde de bore B₂O₃ joue le rôle de fluidifiant. Sa teneur dans la composition de verre selon l'invention est limitée à 3 %, de préférence 2 %, pour éviter les problèmes de volatilisation et d'émission de polluants.

L'oxyde de titane joue un rôle de fluidifiant et contribue à augmenter le module d'Young spécifique. Il peut être présent à titre d'impureté (son taux dans la composition est alors de 0 à 0,5 %) ou être ajouté volontairement. Dans ce dernier cas, il est nécessaire d'utiliser des matières premières inhabituelles apportant le moins d'impuretés possibles dans le mélange vitrifiable ce qui augmente le coût. L'ajout délibéré de TiO₂ n'est avantageux que pour une teneur inférieure à 3 %, de préférence inférieure à 2 %, car au-delà, le verre présente une coloration jaune indésirable.

Na₂O et K₂O peuvent être introduits dans la composition selon l'invention pour contribuer à limiter la dévitrification et réduire éventuellement la viscosité du verre. La teneur en Na₂O et K₂O doit cependant rester inférieure à 2 % pour éviter une diminution pénalisante de la résistance hydrolytique du verre. De préférence, la composition comprend moins de 0,8 % de ces deux oxydes.

Du fluor F₂ peut être présent dans la composition pour aider à la fusion du verre et au fibrage. Néanmoins, sa teneur est limitée à 1 % car au-delà peuvent survenir des risques d'émissions polluantes et de corrosion des réfractaires du four.

Les oxydes de fer (exprimés sous forme de Fe₂O₃) sont généralement présents à titre d'impuretés dans la composition selon l'invention. Le taux de Fe₂O₃ doit rester inférieur à 1 %, de préférence inférieur ou égal à 0,5 % pour ne pas nuire de façon rédhibitoire à la couleur des fils et à la conduite de l'installation de fibrage, en particulier aux transferts de chaleur dans le four.

De préférence, les fils de verre ont une composition comprenant les constituants suivants dans les limites définies ci-après exprimées en pourcentages pondéraux :

| | |
|---|---|
| SiO₂ | 58 - 63 % |
| Al₂O₃ | 13 - 18 % |
| CaO | 12,5 - 15 % |
| MgO | 7-9% |
| CaO/MgO | 1,5 - 1,9 |
| Li₂O | 0,1 - 0,5 % |
| BaO+SrO | 0 - 1 % |
| B₂O₃ | 0 - 2 % |
| TiO₂ | 0 - 0,5 % |
| Na₂O + K₂O | < 0,8 % |
| F₂ | 0 - 1 % |
| Fe₂O₃ | < 0,5 % |

De manière particulièrement avantageuse, la composition présente un rapport pondéral Al₂O₃/(Al₂O₃+CaO+MgO) qui varie de 0,40 à 0,44, de préférence inférieur ou égal à 0,42 ce qui permet d'obtenir des verres ayant une température de liquidus inférieure ou égale à 1250°C, de préférence inférieure ou égale à 1210°C.

En règle générale, les fils de verre selon l'invention sont exempts d'oxyde de bore B₂O₃ et de fluor F₂.

Les fils de verre selon l'invention sont obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement. Il peut s'agir d'un support en rotation lorsque les fils sont collectés sous la forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus ou coupés, tissus, tricots, tresses, rubans ou mats, ces fils étant composés de filaments de diamètre pouvant aller de 5 à 30 micromètres environ.

Le verre fondu alimentant les filières est obtenu à partir de matières premières pures ou le plus souvent naturelles (c'est-à-dire pouvant contenir des impuretés à l'état de traces), ces matières étant mélangées dans des proportions appropriées, puis étant fondues. La température du verre fondu est réglée de façon traditionnelle de manière à permettre le fibrage et éviter les problèmes de dévitrification. Avant leur rassemblement sous forme de fils, les filaments sont généralement revêtus d'une composition d'ensimage visant à les protéger de l'abrasion et facilitant leur association ultérieure avec les matières à renforcer.

Les composites obtenus à partir des fils selon l'invention comprennent au moins une matière organique et/ou au moins une matière inorganique et des fils de verre, une partie au moins des fils étant des fils selon l'invention.

Les exemples qui suivent permettent d'illustrer l'invention sans toutefois la limiter.

Des fils de verre composés de filaments de verre de 17 µm de diamètre sont obtenus par étirage de verre fondu ayant la composition figurant dans le tableau 1, exprimée en pourcentages pondéraux.

On note T(log η=3) la température à laquelle la viscosité du verre est égale à 10³ poises (déciPascal seconde).

On note T_{liquidus} la température de liquidus du verre, correspondant à la température à laquelle la phase la plus réfractaire, qui peut dévitrifier dans le verre, a une vitesse de croissance nulle et correspond ainsi à la température de fusion de cette phase dévitrifiée.

On reporte la valeur du module d'Young spécifique du verre en masse calculée à partir du module d'Young mesuré selon la norme ASTM C 1259-01 et de la densité mesurée par la méthode d'Archimède (module d'Young spécifique mesuré) et calculée à partir d'un modèle établi sur la base de données existantes à l'aide d'un logiciel de statistique (module d'Young spécifique calculé). On précise qu'il existe une bonne corrélation entre le module d'Young spécifique mesuré sur le verre en masse et le module d'Young spécifique d'une mèche constituée de filaments de ce même verre ; par conséquent, les valeurs du tableau 1 permettent de donner une estimation des propriétés mécaniques en terme de module du verre après fibrage. On donne à titre d'exemples comparatifs les mesures pour un verre ne contenant pas de Li₂O (exemple 6), le verre selon l'exemple 5 de US 4199364 (exemple 7) et les verres E et R.

Il apparaît que les exemples selon l'invention présentent un excellent compromis entre les propriétés de fusion et de fibrage et les propriétés mécaniques. Ces propriétés de fibrage sont particulièrement avantageuses, notamment avec une température de liquidus de l'ordre de 1210°C, nettement plus faible que celle du verre R. La plage de fibrage est positive, avec notamment un écart entre T(log η=3) et T_{liquidus} supérieur à 50°C, et pouvant atteindre 68°C.

Le module d'Young spécifique du verre obtenu à partir des compositions selon l'invention (Ex. 1 à 5) est nettement plus élevé que celui du verre E et aussi amélioré par rapport au verre R et au verre sans Li₂O (exemple 6).

Avec les verres selon l'invention, on atteint ainsi de manière remarquable des propriétés mécaniques sensiblement améliorées par rapport à celles du verre R, tout en abaissant substantiellement la température de fibrage pour se rapprocher de la valeur obtenue pour le verre E.

Les verres selon l'invention cristallisent en trois phases. Au liquidus, la phase est le diopside qui est plus favorable car moins réfractaire que l'anorthite (exemple 6). La vitesse maximale de croissance du diopside est plus faible que pour le verre de l'exemple 7 dont le rapport CaO/MgO est égal à 2,14 (réduction d'au moins 50 %).

Les fils de verre selon l'invention sont plus économiques que les fils de verre R qu'ils peuvent remplacer avantageusement dans certaines applications, notamment aéronautiques ou pour le renforcement de pales d'hélicoptères ou de câbles optiques.

**TABLEAU 1**

| | | Ex. 1 | Ex. 2 | Ex. 3 | Ex. 4 | Ex. 5 | Ex. 6 | Ex. 7 | Verre E | Verre R |
|---|---|---|---|---|---|---|---|---|---|---|
| SiO₂ (%) | | 60,75 | 60,70 | 61,50 | 61,50 | 61,50 | 59,46 | 60,48 | 54,4 | 60,0 |
| Al₂O₃ (%) | | 15,80 | 15,90 | 15,05 | 14,80 | 15,40 | 15,94 | 15,29 | 14,5 | 25,0 |
| CaO (%) | | 13,90 | 13,50 | 13,90 | 13,90 | 13,55 | 14,84 | 15,00 | 21,2 | 9,0 |
| MgO (%) | | 7,90 | 8,40 | 7,90 | 7,90 | 7,70 | 8,77 | 6,99 | 0,3 | 6,0 |
| CaO/MgO | | 1,75 | 1,60 | 1,76 | 1,76 | 1,76 | 1,70 | 2,14 | 70,6 | 1,5 |
| Li₂O (%) | | 0,48 | 0,50 | 0,50 | 0,75 | 0,75 | - | 0,60 | - | - |
| B₂O₃ (%) | | - | - | - | - | - | - | - | 7,3 | - |
| TiO₂ (%) | | 0,12 | 0,12 | 0,12 | 0,12 | 0,12 | 0,13 | 0,64 | - | - |
| Na₂O + K₂O (%) | | 0,73 | 0,73 | 0,73 | 0,73 | 0,73 | 0,39 | 0,69 | 0,6 | - |
| Fe₂O₃ (%) | | 0,18 | 0,18 | 0,18 | 0,18 | 0,18 | 0,24 | 0,31 | - | - |
| T(log η=3) (°C) | | | | | | | | | | |
| | - calculé | 1278 | 1275 | 1278 | 1264 | 1271 | 1286 | n. d. | n. d. | n. d. |
| | - mesuré | 1269 | n. d. | n. d. | n. d. | n. d. | 1281 | n. d. | 1203 | 1410 |
| T_{liquidus} (°C) | | 1210 | (1210)* | (1210)* | (1210)* | (1210)* | 1220 | 1210 | 1080 | 1330 |
| T(log η=3) - T_{liquidus} (°C) | | 59 | (65)* | (68)* | (54)* | (61)* | 61 | n. d. | 123 | 80 |
| Module d'Young spécifique (MPa/kg/m³) | | | | | | | | | | |
| | - calculé | 36,10 | 36,30 | 36,20 | 36,60 | 36,60 | 35,50 | n. d. | n. d. | 35,50 |
| | - mesuré | 36,20 | n. d. | n. d. | n. d. | n. d. | 35,10 | 35,60 | 33,30 | 35,55 |
| Phase au liquidus | | Diopside | n. d. | Diopside | n. d. | n. d. | Anorthite | Diopside | n. d. | n. d. |
| Vmax (*m/min) à T(Vmax) (°C) | | 4,9 / 1060 | n. d. | 3,9 / 1100 | n. d. | n. d. | 1,9 / 1100 | 9,8 / 1100 | n. d. | n. d. |
| Phase 2 | | Anorthite | n. d. | Anorthite | n. d. | n. d. | Diopside | Anorthite | n. d. | n. d. |
| Vmax (*m/min) à T(Vmax) (°C) | | 2,4 / 1020 | n. d. | 2,4 / 1060 | n. d. | n. d. | 3,3 / 1140 | 1,63 / 1020 | n. d. | n. d. |
| Phase 3 | | Forstérite | n. d. | Enstatite | n. d. | n. d. | Forstérite | - | n. d. | n. d. |
| Vmax (*m/min) à T(Vmax) (°C) | | 0,5 / 1020 | n. d. | 0,5 / 1020 | n.d. | n. d. | 0,4 /1080 | - | n. d. | n. d. |

| | | | | | | | | | | |
|---|---|---|---|---|---|---|---|---|---|---|
| nn. d. : non déterminé * : valeur calculée | | | | | | | | | | |

## Revendications

1. Fil de verre de renforcement dont la composition comprend les constituants suivants dans les limites définies ci-après exprimées en pourcentages pondéraux :
| | |
|---|---|
| SiO₂ | 58-63% |
| Al₂O₃ | 12-20% |
| CaO | 12-17% |
| MgO | 6-12% |
| CaO/MgO | ≤ 2, de préférence ≥ 1,3 |
| Li₂O | 0,1-0,8%, de préférence ≤ 0,6% |
| BaO+SrO | 0-3% |
| B₂O₃ | 0-3% |
| TiO₂ | 0-3% |
| Na₂O + K₂O | <2% |
| F₂ | 0-1% |
| Fe₂O₃ | <1%; |
ladite composition comprenant une teneur en Al₂O₃+MgO+Li₂O supérieure ou égale à 23%.

2. Fil de verre selon la revendication 1, **caractérisé en ce que** la composition comprend une teneur en SiO₂+Al₂O₃ supérieure à 70%.

3. Fil de verre selon la revendication 2, **caractérisé en ce que** la composition comprend une teneur en SiO₂+Al₂O₃ supérieure à 75%.

4. Fil de verre selon l'une des revendications 1 à 3, **caractérisé en ce que** la composition présente un rapport pondéral Al₂O₃/(Al₂O₃+CaO+MgO) variant de 0,40 à 0,44.

5. Fil de verre selon la revendication 4, **caractérisé en ce que** la composition présente un rapport pondéral Al₂O₃/(Al₂O₃+CaO+MgO) variant de 0,40 à 0,42.

6. Fil de verre selon l'une des revendications 1 à 5, **caractérisé en ce que** la composition comprend les constituants suivants:
| | |
|---|---|
| SiO₂ | 58-63% |
| Al₂O₃ | 13-18% |
| CaO | 12,5-15% |
| MgO | 7-9% |
| CaO/MgO | 1,5-1,9 |
| Li₂O | 0,1-0,5% |
| BaO + SrO | 0-1% |
| B₂O₃ | 0-2% |
| TiO₂ | 0-0,5% |
| Na₂O + K₂O | <0,8% |
| F₂ | 0-1% |
| Fe₂O₃ | <0,5%. |

7. Fil de verre selon l'une des revendications 1 à 6, **caractérisé en ce qu'**il est exempt de B₂O₃ et de F₂.

8. Assemblage de fils de verre, notamment sous la forme de tissu, **caractérisé en ce qu'**il comprend des fils de verre tels que définis par l'une des revendications 1 à 7.

9. Composite de fils de verre et de matière(s) organique(s) et/ou inorganique(s), **caractérisé en ce qu'**il comprend des fils de verre tels que définis par l'une des revendications 1 à 7.

10. Composition de verre adaptée à la réalisation de fils de verre de renforcement comprenant les constituants suivants dans les limites définies ci-après exprimées en pourcentages pondéraux :
| | |
|---|---|
| SiO₂ | 58-63% |
| Al₂O₃ | 12-20% |
| CaO | 12-17% |
| MgO | 6-12% |
| CaO/MgO | ≤ 2, de préférence ≥ 1,3 |
| Li₂O | 0,1-0,8%, de préférence ≤ 0,6% |
| BaO + SrO | 0-3% |
| B₂O₃ | 0-3% |
| TiO₂ | 0-3% |
| Na₂O + K₂O | <2% |
| F₂ | 0-1% |
| Fe₂O₃ | <1%; |
et comprenant une teneur en Al₂O₃+MgO+Li₂O supérieure ou égale à 23%.

11. Composition selon la revendication 10, **caractérisée en ce qu'**elle présente une plage de formage (T(log ή=3)-T_{liquidus}) supérieure à 50 °C.

12. Composition selon la revendication 10, **caractérisée en ce qu'**elle comprend les constituants suivants :
| | |
|---|---|
| SiO₂ | 58-63% |
| Al₂O₃ | 13-18% |
| CaO | 12,5-15% |
| MgO | 7-9% |
| CaO/MgO | 1,5-1,9 |
| Li₂O | 0,1-0,5% |
| BaO + SrO | 0-1% |
| B₂O₃ | 0-2% |
| TiO₂ | 0-0,5% |
| Na₂O + K₂O | <0,8% |
| F₂ | 0-1% |
| Fe₂O₃ | <0,5%. |

## Claims

1. A glass reinforcement strand whose composition comprises the following constituents in the limits defined below, expressed as percentages by weight:
| | |
|---|---|
| SiO₂ | 58-63% |
| Al₂O₃ | 12-20% |
| CaO | 12-17% |
| MgO | 6-12% |
| CaO/MgO | ≤ 2, preferably ≥ 1.3 |
| Li₂O | 0.1-0.8%, preferably ≤ 0.6% |
| BaO + SrO | 0-3% |
| B₂O₃ | 0-3% |
| TiO₂ | 0-3% |
| Na₂O + K₂O | <2% |
| F₂ | 0-1% |
| Fe₂O₃ | <1%; |
wherein the composition has an Al₂O₃+MgO+Li₂O content equal to 23% or higher.

2. The glass strand as claimed in claim 1, **characterized in that** the composition has an SiO₂+Al₂O₃ content of greater than 70%

3. The glass strand as claimed in claim 2, **characterized in that** the composition has an SiO₂+Al₂O₃ content of greater than 75%.

4. The glass strand as claimed in any of claims 1 to 3, **characterized in that** the composition has an Al₂O₃/(Al₂O₃+CaO+MgO) weight ratio in the range of 0.40 to 0.44.

5. The glass strand as claimed in claim 4, **characterized in that** the composition has an Al₂O₃/(Al₂O₃+CaO+MgO) weight ratio in the range of 0.40 to 0.42.

6. The glass strand as claimed in any of claims 1 to 5, **characterized in that** the composition comprises the following constituents:
| | |
|---|---|
| SiO₂ | 58-63% |
| Al₂O₃ | 13-18% |
| CaO | 12.5-15% |
| MgO | 7-9% |
| CaO/MgO | 1.5-1.9 |
| Li₂O | 0.1-0.5% |
| BaO + SrO | 0-1% |
| B₂O₃ | 0-2% |
| TiO₂ | 0-0.5% |
| Na₂O + K₂O | <0.8% |
| F₂ | 0-1% |
| Fe₂O₃ | <0.5%. |

7. The glass strand as claimed in any of claims 1 to 6, **characterized in that** it contains neither B₂O₃ or F₂.

8. An assembly of glass strands, especially in the form of woven fabric, **characterized in that** it comprises glass strands as defined in any of claims 1 to 7.

9. A composite consisting of glass strands and organic and/or inorganic material(s), **characterized in that** it comprises glass strands as defined in any of claims 1 to 7.

10. A glass composition suitable for producing glass reinforcement strands, comprising the following constituents in the limits defined below, expressed as percentages by weight:
| | |
|---|---|
| SiO₂ | 58-63% |
| Al₂O₃ | 12-20% |
| CaO | 12-17% |
| MgO | 6-12% |
| CaO/MgO | ≤ 2, preferably ≥ 1.3 |
| Li₂O | 0.1-0.8%, preferably ≤ 0.6% |
| BaO + SrO | 0-3% |
| B₂O₃ | 0-3% |
| TiO₂ | 0-3% |
| Na₂O + K₂O | <2% |
| F₂ | 0-1% |
| Fe₂O₃ | <1%; |
wherein the composition has an Al₂O₃+MgO+Li₂O content equal to 23% or higher.

11. The composition as claimed in claim 10, **characterized in that** it has a forming range (T(log ή=3)-T_{liquidus}) of more than 50 °C.

12. The composition as claimed in claim 10, **characterized in that** it comprises the following constituents:
| | |
|---|---|
| SiO₂ | 58-63% |
| Al₂O₃ | 13-18% |
| CaO | 12.5-15% |
| MgO | 7-9% |
| CaO/MgO | 1.5-1.9 |
| Li₂O | 0.1-0.5% |
| BaO + SrO | 0-1% |
| B₂O₃ | 0-2% |
| TiO₂ | 0-0.5% |
| Na₂O + K₂O | <0.8% |
| F₂ | 0-1% |
| Fe₂O₃ | <0.5%. |

## Patentansprüche

1. Verstärkungsglasfaden, dessen Zusammensetzung die folgenden Bestandteile innerhalb der nachstehend definierten, in Gewichtsprozentsätzen ausgedrückten Grenzen umfaßt:
| | |
|---|---|
| SiO₂ | 58 - 63 % |
| Al₂O₃ | 12 - 20 % |
| CaO | 12 - 17 % |
| MgO | 6 - 12 % |
| CaO/MgO | ≤ 2, vorzugsweise ≥ 1,3 |
| Li₂O | 0,1 - 0,8 %, vorzugsweise ≤ 0,6 % |
| BaO + SrO | 0 - 3 % |
| B₂O₃ | 0 - 3 % |
| TiO₂ | 0 - 3 % |
| Na₂O + K₂O | < 2 % |
| F₂ | 0 - 1 % |
| Fe₂O₃ | < 1 %, |
wobei die Zusammensetzung einen Gehalt an Al₂O₃+MgO+ Li₂O von über oder gleich 23 % aufweist.

2. Glasfaden nach Anspruch 1, **dadurch gekennzeichnet, daß** die Zusammensetzung einen Gehalt an SiO₂+ Al₂O₃ von mehr als 70 % aufweist.

3. Glasfaden nach Anspruch 2, **dadurch gekennzeichnet, daß** die Zusammensetzung einen Gehalt an SiO₂+ Al₂O₃ von mehr als 75 % aufweist.

4. Glasfaden nach einem der Ansprüche 1 bis 3, **dadurch gekennzeichnet, daß** die Zusammensetzung ein von 0,40 bis 0,44 variierendes Gewichtsverhältnis Al₂O₃/(Al₂O₃+CaO+MgO) aufweist.

5. Glasfaden nach Anspruch 4, **dadurch gekennzeichnet, daß** die Zusammensetzung ein von 0,40 bis 0,42 variierendes Gewichtsverhältnis Al₂O₃/(Al₂O₃+CaO+MgO) aufweist.

6. Glasfaden nach einem der Ansprüche 1 bis 5, **dadurch gekennzeichnet, daß** die Zusammensetzung die folgenden Bestandteile umfaßt:
| | |
|---|---|
| SiO₂ | 58 - 63 % |
| Al₂O₃ | 13 - 18 % |
| CaO | 12,5 - 15 % |
| MgO | 7 - 9 % |
| CaO/MgO | 1,5 - 1,9 |
| Li₂O | 0,1 - 0,5 % |
| BaO + SrO | 0 - 1 % |
| B₂O₃ | 0 - 2 % |
| TiO₂ | 0 - 0,5 % |
| Na₂O + K₂O | < 0,8 % |
| F₂ | 0 - 1 % |
| Fe₂O₃ | < 0,5 %. |

7. Glasfaden nach einem der Ansprüche 1 bis 6, **dadurch gekennzeichnet, daß** er B₂O₃- und F₂-frei ist.

8. Anordnung von Glasfäden, insbesondere in Form eines Gewebes, **dadurch gekennzeichnet, daß** sie Glasfäden umfaßt, wie sie durch einen der Ansprüche 1 bis 7 definiert sind.

9. Verbund aus Glasfäden und organischem (organischen) und/oder anorganischem (anorganischen) Material(ien), **dadurch gekennzeichnet, daß** er Glasfäden umfaßt, wie sie durch einen der Ansprüche 1 bis 7 definiert sind.

10. Glaszusammensetzung, die für die Herstellung von Verstärkungsglasfäden geeignet ist, umfassend die folgenden Bestandteile innerhalb der nachstehend definierten, in Gewichtsprozentsätzen ausgedrückten Grenzen:
| | |
|---|---|
| SiO₂ | 58 - 63 % |
| Al₂O₃ | 12 - 20 % |
| CaO | 12 - 17 % |
| MgO | 6 - 12 % |
| CaO/MgO | ≤ 2, vorzugsweise ≥ 1,3 |
| Li₂O | 0,1 - 0,8 %, vorzugsweise ≤ 0,6 % |
| BaO + SrO | 0 - 3 % |
| B₂O₃ | 0 - 3 % |
| TiO₂ | 0 - 3 % |
| Na₂O + K₂O | < 2 % |
| F₂ | 0-1% |
| Fe₂O₃ | < 1 %, |
sowie einen Gehalt an Al₂O₃+MgO+ Li₂O von über oder gleich 23 %.

11. Zusammensetzung nach Anspruch 10, **dadurch gekennzeichnet, daß** sie einen Formungsbereich (T(log η = 3)-T_{liquidus}) von über 50 °C aufweist.

12. Zusammensetzung nach Anspruch 10, **dadurch gekennzeichnet, daß** sie die folgenden Bestandteile umfaßt:
| | |
|---|---|
| SiO₂ | 58 - 63 % |
| Al₂O₃ | 13 - 18 % |
| CaO | 12,5 - 15 % |
| MgO | 7 - 9 % |
| CaO/MgO | 1,5 - 1,9 |
| Li₂O | 0,1 - 0,5 % |
| BaO + SrO | 0 - 1 % |
| B₂O₃ | 0 - 2 % |
| | |
|---|---|
| TiO₂ | 0 - 0,5 % |
| Na₂O + K₂O | < 0,8 % |
| F₂ | 0 - 1 % |
| Fe₂O₃ | < 0,5 %. |
